# EUROPEAN PATENT APPLICATION

(11) **EP 4 382 991 A1**
(43) Date of publication of application: **12.06.2024**
(21) Application number: 23213952.7
(22) Date of filing: 04.12.2023
(51) Int. Cl.: G02B 27/01

(54) **INFORMATION PROCESSING DEVICE, DISPLAY SYSTEM, MOVABLE APPARATUS, INFORMATION PROCESSING METHOD, AND STORAGE MEDIUM**

(30) Priority: 05.12.2022 JP 2022194017
(71) Applicant: CANON KABUSHIKI KAISHA, Tokyo 146-8501 (JP)
(72) Inventor: SUZUKI, Ryuta, Tokyo, 146-8501 (JP); YAGI, Masaya, Tokyo, 146-8501 (JP)
(74) Representative: TBK

(57) **Abstract**

An information processing device for an HUD system capable of reducing an influence of an obstacle comprises an acquisition unit configured to acquire obstacle information at a position viewed in a real space of a virtual image formed by a head-up display; and a control unit configured to control the position viewed in the real space of the virtual image based on the obstacle information acquired by the acquisition unit.

## Description

### BACKGROUND OF THE INVENTION

### Field of the Invention

The present invention relates to an information processing device, a display system, a movable apparatus, a display control method, and a storage medium for a head-up display or the like.

### Description of the Related Art

Head-up displays (HUDs) that overlap and display virtual images on foregrounds of vehicles by projecting videos to projection members such as front windows (windshields) are known. In the HUDs, observers can be given sense of distance (sense of depth by controlling focal positions of the virtual images.

For example, Japanese Unexamined Patent Publication No. 2019-56840 discloses an HUD system capable of changing a projection distance of a virtual image by changing a slant angle and a distance to an optical member.

In the technology of the related art disclosed in the foregoing Japanese Unexamined Patent Publication No. 2019-56840, however, when an obstacle is in front, a virtual image may overlap the obstacle in front, and thus there is a problem that strange display may be perceived.

### SUMMARY OF THE INVENTION

According to one aspect of the present invention, an information processing device includes at least one processor or circuit configured to function as: an acquisition unit configured to acquire obstacle information at a position viewed in a real space of a virtual image formed by a head-up display; and a control unit configured to control the position viewed in the real space of the virtual image based on the obstacle information acquired by the acquisition unit.

Further features of the present invention will become apparent from the following description of embodiments with reference to the attached drawings.

### BRIEF DESCRIPTION OF THE DRAWINGS

Fig. 1 is a schematic diagram illustrating a multifocal HUD device according to a first embodiment of the present invention.
Fig. 2 is a functional block diagram illustrating an overview of an HUD system according to the first embodiment.
Figs. 3Ato 3C are schematic diagrams illustrating a technology of the related art and the first embodiment.
Fig. 4 is a flowchart illustrating an operation example of an information processing method for the HUD device according to the first embodiment.
Fig. 5 is a schematic diagram illustrating a multifocal HUD device according to a second embodiment.
Fig. 6 is a diagram illustrating an operation of the HUD device according to the second embodiment.
Fig. 7 is a flowchart illustrating an operation example of a display control method for the HUD device according to the second embodiment.

### DESCRIPTION OF THE EMBODIMENTS

Hereinafter, with reference to the accompanying drawings, favorable modes of the present invention will be described using Embodiments. In each diagram, the same reference signs are applied to the same members or elements, and duplicate description will be omitted or simplified.

### First Embodiment

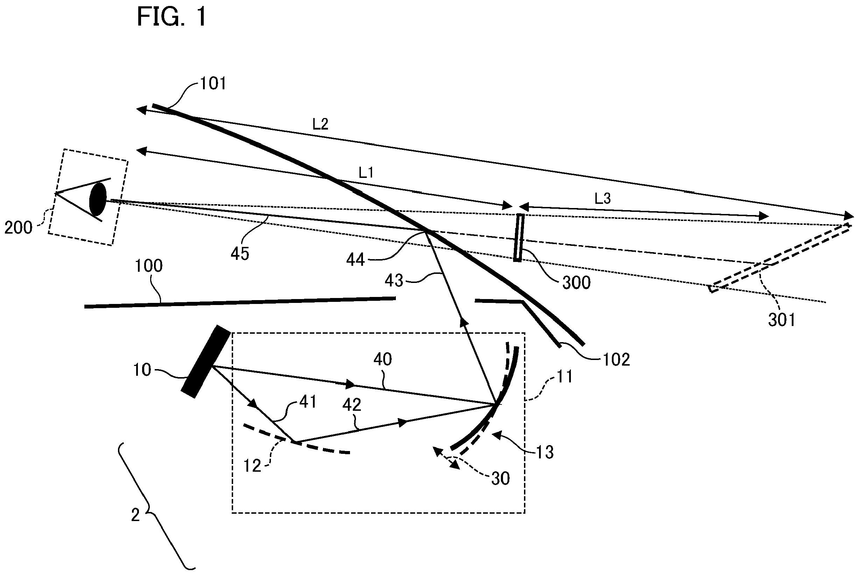

Fig. 1 is a schematic diagram illustrating a multifocal HUD device according to a first embodiment of the present invention. A configuration in which a focal distance is switched and displayed in an HUD device 2 serving as an information processing device disposed in an automobile will be described with reference to Fig. 1.

In the embodiment, an example in which a display system including the HUD device 2 which is a head-up display and a windshield 101 is disposed in an automobile serving as a movable apparatus will be described, but the movable apparatus is not limited to an automobile. For example, the movable apparatus may be an airplane or the like.

In Fig. 1, for the sake of simplicity, parts of the automobile including an exterior 100, a windshield 101 which is a front glass window, and a dashboard 102 which is an in-vehicle structure are illustrated. The HUD device 2 is disposed inside the dashboard 102.

The HUD device 2 is installed such that a projection unit 11 projects an image displayed on a display device 10 to the windshield 101 from below. The HUD device 2 which is a head-up display according to the first embodiment is configured such that a display image is projected to the windshield 101 serving as a light reflection unit (half mirror) to display a virtual image by light reflected from the light reflection unit.

Next, the display device 10 serving as a display unit will be described in detail. The display device 10 is a light source of display light configured to project an image of a projection source projected by the projection unit 11 to the projection unit 11 as display light. The display device 10 according to the first embodiment includes a liquid crystal panel, a backlight, and a lens (not illustrated).

The liquid crystal panel includes a pixel group capable of transmitting and not transmitting light. The liquid crystal panel is disposed in front in an illumination direction of the backlight which is a light source device using a light emitting diode or the like and is configured to be able to display a desired projection source image by selectively transmitting illumination light of the backlight for each pixel.

The lens is treated as a liquid crystal panel and uniformly radiates illumination light from the backlight to the liquid crystal panel. Further, the display device 10 includes an optical element (not illustrated) that controls an optical axis direction and can switch the optical axis direction between two directions of optical axes 40 and 41.

Next, the projection unit 11 will be described. The projection unit 11 is an optical system that projects an image formed by the above-described display device 10 as a projected image to the windshield 101, and includes a first reflection mirror 12 (first reflection unit) and a second reflection mirror 13 (second reflection unit).

The first reflection mirror 12 and the second reflection mirror 13 reflect light projected from the display device 10 and project the light to the windshield 101 to form a virtual image 300 or 301. The light reflection unit includes the first reflection mirror 12 and the second reflection mirror 13, and the HUD device 2 displays light reflected from the light reflection unit as a virtual image.

Of projection directions of a display image of the display device 10, an optical axis on which a nearby virtual image 300 is displayed is indicated as an optical axis 40. A projection destination of the display image from the display device 10 is disposed so that the second reflection mirror 13 reflects the optical axis 40 in the direction of the windshield 101, that is, a direction indicated by an optical axis 43, and a projected image of the display device 10 is expanded at a predetermined magnification and distortion of the projected image is corrected.

That is, an image displayed on the display device 10 is reflected as a projected image from the second reflection mirror 13 along the optical axis 40, and the projected image is projected to the windshield 101 along the optical axis 43. The projected image projected to the windshield 101 is reflected from a reflection unit 44 in which the optical axis 43 intersects the windshield 101 to be guided to an eye box 200.

A reflection optical axis reflected from the reflection unit 44 is indicated as an optical axis 45. When the pupils of a user (a driver of the movable apparatus) are within the eye box 200, the projected image can be viewed as a virtual image 300 in a space at a distance L1 from the eye box 200.

On the other hand, of the projection directions of the display image of the display device 10, an optical axis on which a distant virtual image 301 is displayed is indicated as an optical axis 41. A projection destination of the display image from the display device 10 is disposed so that the first reflection mirror 12 reflects the optical axis 41 in the direction of the second reflection mirror 13, that is, a direction indicated by an optical axis 42.

The second reflection mirror 13 is disposed so that the optical axis 42 reflected from the first reflection mirror 12 is reflected in the direction of the windshield 101, that is, the direction indicated by the optical axis 43, and the projected image of the display device 10 is expanded at a predetermined magnification and distortion of the projected image is corrected.

That is, an image displayed on the display device 10 is reflected as a projected image from the first reflection mirror 12 along the optical axis 41 and is reflected from the second reflection mirror 13 along the optical axis 42. The projected image reflected from the second reflection mirror 13 is projected to the windshield 101 along the optical axis 43. The projected image projected toward the windshield 101 is reflected from the reflection unit 44 in which the optical axis 45 intersects the windshield 101 to be guided to the eye box 200.

When the pupils of the user are within the eye box 200, the projected image can be viewed as a virtual image 301 in a space at a distance L2 from the eye box 200. Here, the virtual image 301 is displayed slantingly, and a range of L3 between the virtual images 300 and 301 can be displayed while gradually changing a slant angle by changing the mirror angle 30 based on an output of a display driving unit 25.

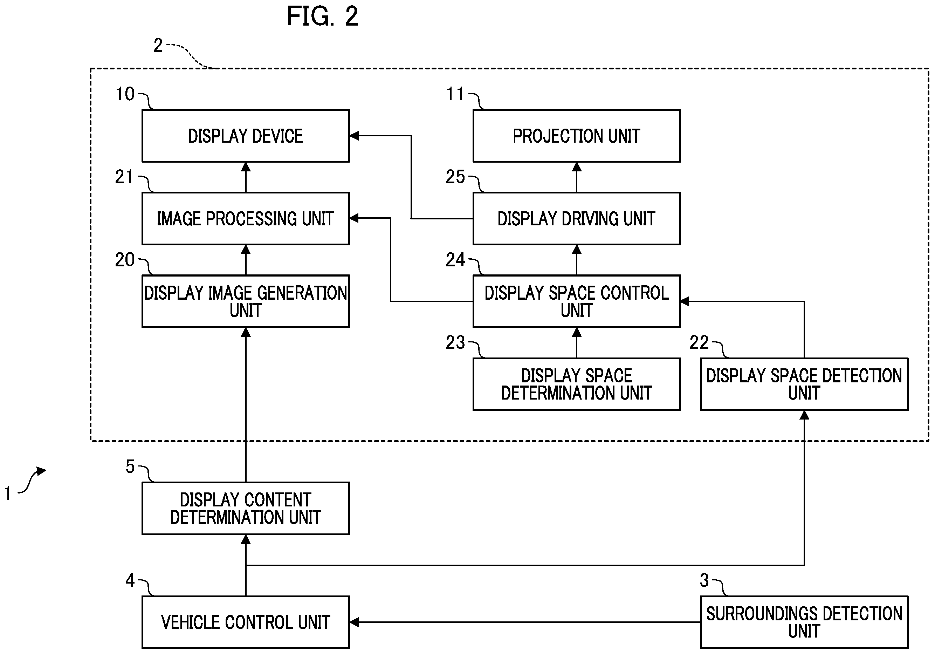

Fig. 2 is a functional block diagram illustrating an outline of an HUD system according to the first embodiment. Some of functional blocks illustrated in Fig. 2 are implemented by allowing a CPU or the like serving as a computer (not illustrated) included in the HUD system to execute a computer program stored in a memory serving as a storage medium (not illustrated).

However, some or all of the functional blocks may be implemented by hardware. As the hardware, a dedicated circuit (ASIC), a processor (a reconfigurable processor or a DSP), or the like can be used. Each functional block illustrated in Fig. 2 may be embedded in the same casing or may be configured by other devices connected to each other via signal lines.

An HUD system 1 serving as a display system according to the first embodiment is mounted in an automobile serving as a movable apparatus. A surroundings detection unit 3, a vehicle control unit 4, and a display content determination unit 5 are mounted along with the HUD device 2. The surroundings detection unit 3 detects an object around the own vehicle and measures a direction and a distance from the own vehicle.

The surroundings detection unit 3 includes an imaging unit such as a camera that includes a radar, a sonar, a light detection and ranging (LiDAR) sensor, or an image sensor of an imaging surface phase difference type or a camera capable of performing stereo ranging. Alternatively, a device that estimates a distance from an object recognition result from a captured image is included.

The vehicle control unit 4 performs management of control information coming from the surroundings detection unit 3 or an own vehicle control system (not illustrated) or driving control (driving or direction control, stopping, and the like) of a vehicle and includes, for example, an engine control unit (ECU). The vehicle control unit 4 functions as a movement control unit that controls movement of the movable apparatus. The display content determination unit 5 determines content which is displayed on the HUD device 2 based on information from the vehicle control unit 4.

A configuration of the HUD device 2 in Fig. 2 will be described. The HUD device 2 includes a display device 10, a projection unit 11, a display image generation unit 20, an image processing unit 21, a display space detection unit 22, a display space determination unit 23, a display space control unit 24, and a display driving unit 25.

The display image generation unit 20 generates a display image which is displayed on the display device 10 based on information of the display content determination unit 5. For example, speed information, surroundings information of a vehicle, and the like are transmitted from the display content determination unit 5, and the display image generation unit 20 generates a display image based on the received information.

The image processing unit 21 performs image processing based on the image generated by the display image generation unit 20 and display space control information from the display space control unit 24 and supplies a result to the display device 10. Here, the image processing unit 21 performs image processing on the display image.

The image processing includes, for example, projection conversion in which a shape of the display image is not changed when the display image is viewed from the eye box 200 even when a slant angle of the virtual image 301 is changed. That is, when a position viewed in a real space of a virtual image is changed, the image processing unit 21 performs image processing based on the position viewed in the real space of the virtual image so that the shape of the display image at the time of viewing from a driver (user) of the movable apparatus is not changed.

The display space detection unit 22 acquires distance information that is distant from an object around the vehicle and is received from the surroundings detection unit 3 by the vehicle control unit 4 and detects whether there is an obstacle in a display space of the HUD device 2. Here, the display space is a region displayed and viewed in the real space by the virtual image 300 or 301.

The display space detection unit 22 functions as an acquisition unit that performs an acquisition step of acquiring obstacle information at a position viewed in a real space of a virtual image formed by the head-up display. The display space detection unit 22 acquires obstacle information regarding whether the position viewed in the real space of the virtual image overlaps with a position of the detected obstacle from the surroundings detection unit 3 including an imaging unit.

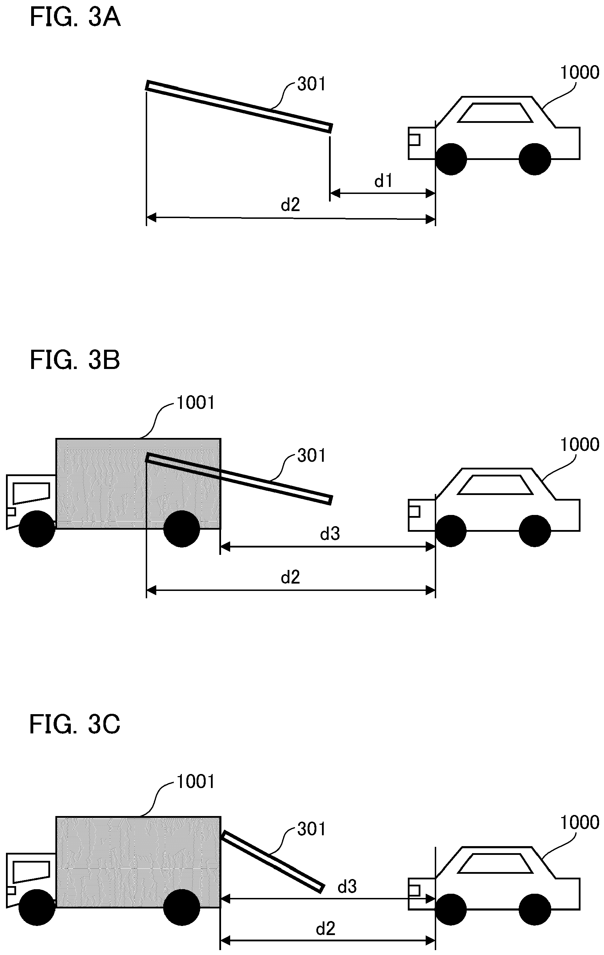

A specific example will be described with reference to Fig. 3A. Figs. 3A to 3C are schematic diagrams illustrating a technology of the related art and the first embodiment and illustrate a technology of the related art related to slant display of a virtual image of the HUD device 2 and an outline of a process according to the first embodiment. Fig. 3A is a diagram illustrating a state in which the virtual image 301 of the HUD device 2 is displayed slantingly for a vehicle 1000 when viewed from the lateral side.

The display space detection unit 22 detects a state of a display space and supplies a distance to an obstacle to the display space control unit 24 when it is detected that there is the obstacle. The display space determination unit 23 determines a display space which is presently scheduled to be displayed based on the present display space of the HUD device 2 by the display space detection unit 22

The display space control unit 24 generates optical path control information and control information of the mirror angle 30 of the second reflection mirror 13 so that the HUD display space does not overlap with the obstacle around the vehicle based on a result of the display space detection unit 22 and a result of the display space determination unit 23. The display space control unit 24 functions as a control unit that controls the position viewed in the real space of the virtual image based on the obstacle information acquired by the display space detection unit 22 serving as the acquisition unit.

That is, based on the state of the display space detected by the display space detection unit 22 and the display space determined by the display space determination unit 23, the display space control unit 24 controls the display space of the virtual image in accordance with the position of the obstacle when it is determined that there is the obstacle in the display space of the virtual image. In the first embodiment, the mirror angle 30 of the second reflection mirror 13 is adjusted to control the display space of the virtual image.

The display space control unit 24 supplies a correction amount of the mirror angle 30 of the second reflection mirror 13 to the image processing unit 21. The display driving unit 25 performs control of the mirror angle 30 and optical path control of the display device 10 based on the control information of the mirror angle 30 of the second reflection mirror 13 and the control information of the optical path control information generated by the display space control unit 24.

When the angle of the second reflection mirror 13 is controlled, the angle of the second reflection mirror 13 may be controlled by rotating the second reflection mirror 13 in the circumferential direction of a predetermined rotation shaft.

When there is no obstacle in front, as illustrated in Fig. 3A, the virtual image 301 is displayed slantingly and the virtual image 301 of the HUD device 2 is displayed so that there is a depth sense or a stereoscopic sense from the eye box 200 of the vehicle 1000.

At this time, the display space of the virtual image 301 corresponds to a space between a distance d1 from a mounting position of the HUD device 2 to the lower end of the virtual image 301 and a distance d2 from the mounting position of the HUD device 2 to the upper end of the virtual image 301 in the front and rear directions. A width of the display space of the virtual image 301 in the right and left directions may be appropriately set in accordance with characteristics of the HUD device 2 or a speed of the movable apparatus.

Next, Fig. 3B illustrates a case where there is an obstacle 1001 in a display region (the display space) of the HUD device 2 when the HUD device 2 of the vehicle 1000 displays the virtual image 301. A distance from the mounting position of the HUD device 2 to the obstacle 1001 is d3 and a distance from the mounting position of the HUD device 2 to the upper end of the virtual image 301 is d2.

At this time, when d3<d2, the virtual image 301 is entered into the obstacle 1001 and displayed. Therefore, contradiction occurs in a distance between the virtual image and the reality, and thus a visual effect such as a depth sense or a stereoscopic sense obtained in Fig. 3A may be faded.

Next, Fig. 3C is a diagram illustrating a state in which the display angle (slant angle) of the virtual image 301 is changed and the virtual image 301 is not entered into the obstacle 1001 when there is the obstacle 1001 in the display region (display space) of the virtual image 301 of the HUD device 2 as in Fig. 3B.

By standing up the display angle (slant angle) of the virtual image 301 so that the above-described distances d3 and d2 satisfy d3>=d2, it is possible to display the virtual image 301 without being entered into the obstacle 1001. In the first embodiment, when the slant angle of the virtual image 301 is stood up, the distance d1 to the lower end of the virtual image 301 is not changed.

When the display angle (slant angle) of the virtual image 301 is stood up, the display image is subjected to projection transformation to be displayed in the above-described image processing unit 21 without changing the shape of the display image of the HUD device 2 at a viewpoint of the eye box 200 of the vehicle 1000.

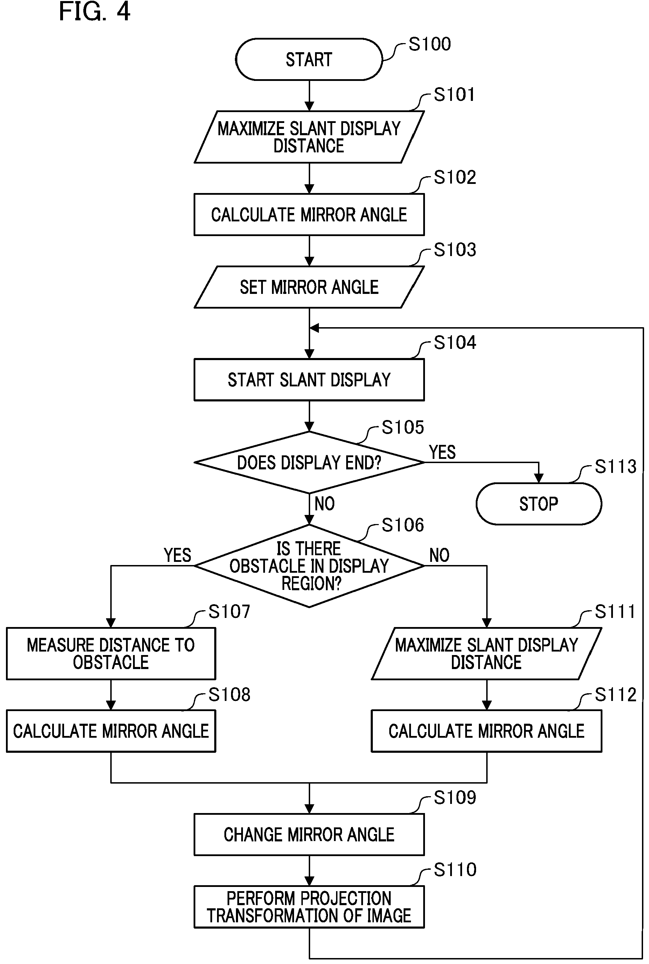

Fig. 4 is a flowchart illustrating an operation example of an information processing method for the HUD device according to the first embodiment. Fig. 4 illustrates a flow for controlling the virtual image 301 so that the virtual image 301 is not entered into the obstacle when there is the obstacle in the display region of the HUD device 2, as in Fig. 3C described above.

An operation of each step of the flowchart of Fig. 4 is performed by causing a CPU or the like serving as a computer in the HUD system to execute a computer program stored in a memory.

First, in steps S100 to S105, a process when the HUD system 1 is activated will be described. In step S100, for example, the HUD system 1 is activated to start the flow of Fig. 4 when an engine of a vehicle in which the HUD system 1 is mounted starts or the HUD system 1 is powered on through a user operation.

In step S101, the display space determination unit 23 acquires a maximum value (corresponding to the distance d2 in Figs. 3A to 3C) of a slant display distance of the virtual image 301 and stores the maximum value of the slant display distance in a memory of the HUD system 1. In step S102, the display space control unit 24 calculates a mirror angle 30 of the second reflection mirror 13 from the maximum value of the slant display distance acquired in step S101.

By forming a relation between the mirror angle 30 and the slant display distance of the virtual image 301 as a table and storing the table in the memory of the of the HUD system 1, it is possible to acquire the mirror angle 30 of the second reflection mirror 13 from the maximum value of the slant display distance. A relation between the mirror angle 30 and the slant display distance of the virtual image 301 may be stored as a function formula and the mirror angle 30 may be calculated based on the function formula.

In step S103, the display driving unit 25 performs setting of the mirror angle 30 of the second reflection mirror 13 calculated in step S102 and initial setting of the HUD system 1. In step S104, a process at the time of activation of the HUD system 1 is completed and the HUD device 2 starts slant display of the virtual image 301.

A processing order of the slant display start of step S104 and the determination of the obstacle in the display space after step S106 may be reversed so that the display space of the HUD device 2 does not overlap with the space where there is the obstacle.

In step S105, the vehicle control unit 4 determines whether the display by the HUD system 1 is stopped, stops the display in step S113 when the display ends, and ends the flow of Fig. 4. That is, for example, when the engine of the vehicle in which the HUD system 1 is mounted is cut or the HUD system 1 is powered off through a user operation, the process proceeds to step S113.

Conversely, in the case of No in step S105, in steps S106 to S110, a process is performed in accordance with whether there is the obstacle in the display space of the HUD device 2. In step S106, when the display space detection unit 22 detects that there is the obstacle in the display space (display region) of the HUD device 2, the process proceeds to step S107. In the case of No, the process proceeds to step S111.

Here, step S106 functions as a display space detection step of detecting a state of the display space. In step S106, it is determined that there is the obstacle in the display region when the position viewed in the real space of the virtual image overlaps with the position of the detected obstacle.

In step S107, the display space control unit 24 acquires the distance d3 to the obstacle measured in the surroundings detection unit 3. In step S108, based on the distance d2 which is a maximum value of the slant display distance of the virtual image 301, the display space control unit 24 calculates an angle of the second reflection mirror 13 so that the distance d2 satisfies d3>d2.

The mirror angle 30 can be calculated based on a function formula from the distance d2, as described above, or can be acquired based on a table of the distance d2 and the mirror angle 30 stored in advance in the memory.

In step S109, the display driving unit 25 changes the mirror angle 30 based on the angle of the mirror angle 30 acquired by the display space control unit 24 in step S108. In step S110, the image processing unit 21 performs projection transformation of an image to be displayed based on the mirror angle 30 obtained in step S109 and performs control such that the shape of the display image from the eye box 200 is not changed.

Since steps S111 and S112 are similar to steps S101 and S102, description thereof will be omitted.

As described above, steps S107 to S109 function as a control step of controlling the position viewed in the real space of the virtual image based on the obstacle information acquired by the acquisition unit. That is, when the position viewed in the real space of the virtual image overlaps with the position of the obstacle, the position viewed in the real space of the virtual image is controlled such that the position viewed in the real space of the virtual image does not overlap with the position of the obstacle.

### Second Embodiment

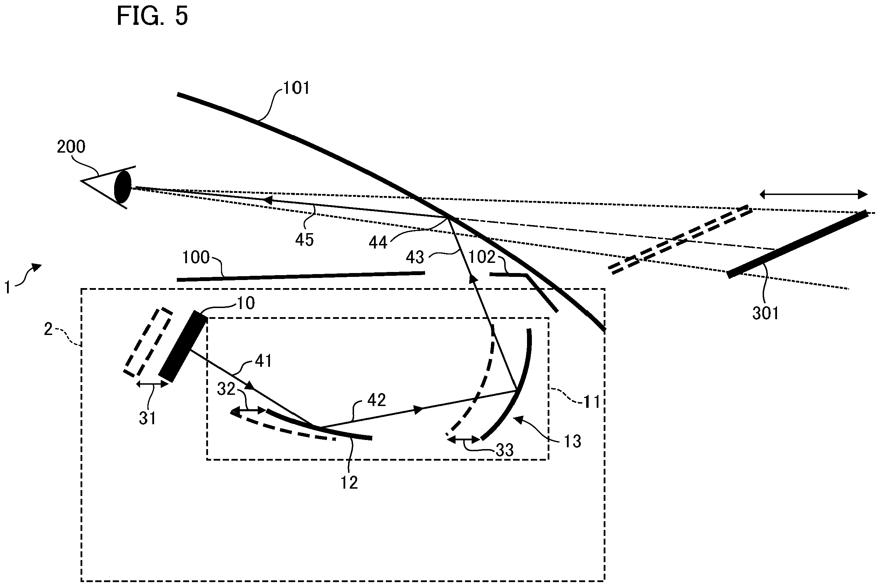

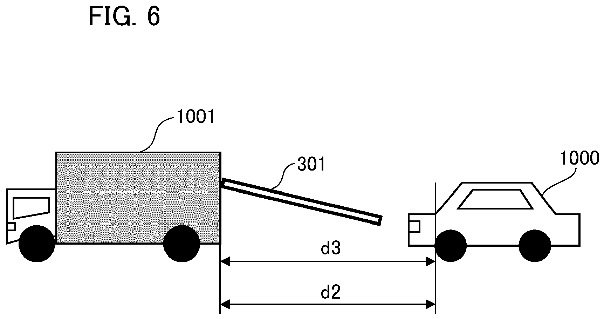

Next, a second embodiment of the present invention will be described with reference to Figs. 5 and 6. While an obstacle is avoided by changing a display slant angle of the virtual image 301 in the first embodiment, an obstacle is avoided and the virtual image 301 is displayed by moving the display space forward or backward without changing the display slant angle of the virtual image 301 in the second embodiment. That is, the position of the virtual image is moved forward or backward with the slant angle of the virtual image maintained.

Difference between a configuration of the HUD system 1 according to the second embodiment and the configuration according to the first embodiment will be described with reference to Fig. 5. Fig. 5 is a schematic diagram illustrating a multifocal HUD device according to the second embodiment.

In the HUD device 2 according to the second embodiment, the display device 10, the first reflection mirror 12, and the second reflection mirror 13 are configured to be movable without changing an angle. In this way, at least one of a position and an angle of the second reflection mirror 13 can be controlled.

That is, the display driving unit 25 can perform driving for movement with an angle of each of the display device 10, the first reflection mirror 12, and the second reflection mirror 13 maintained. Movement is performed while performing control so that a movement amount 31 of the display device 10, a movement amount 32 of the first reflection mirror 12, and a movement amount 33 of the second reflection mirrors 13 are the same.

The angle of the display device 10 may be able to be controlled. That is, at least one of a position and an angle of the display device 10 serving as a display unit that displays an image may be able to be controlled.

Accordingly, the display position can be moved without changing a slant angle of the virtual image 301. Any configuration may be adopted as along as the display position can be shifted without changing the slant angle of the virtual image. The angle of the first reflection mirror 12 can be controlled.

That is, at least one of a position and an angle of the first reflection mirror 12 may be configured to be controlled. When the angle of the first reflection mirror 12 is controlled, the angle of the first reflection mirror 12 may be controlled by rotating the first reflection mirror 12 in a circumferential direction of a predetermined rotational shaft (a rotational shaft of the first reflection unit).

Based on a result of the display space detection unit and a result of the display space determination unit, the display space control unit 24 calculates the movement amounts 31 to 33 so that the display space of the HUD device 2 does not overlap with the space of an obstacle such as a vehicle. The calculated movement amounts 31 to 33 are supplied to the image processing unit 21 and the display driving unit 25.

The display driving unit 25 performs movement of the display device 10, the first reflection mirror 12, and the second reflection mirror 13 based on the movement amounts 31 to 33 calculated by the display space control unit 24. Since the other configurations of the HUD system 1 are similar to those of the first embodiment, description thereof will be omitted.

Fig. 6 is a diagram illustrating an operation of the HUD device according to the second embodiment and illustrating an example in which the problem described in Fig. 3B is solved with a configuration of Fig. 5. That is, in Fig. 3B, the virtual image 301 overlaps and is entered into the obstacle 1001. The virtual image 301 which is not entered into the obstacle 1001 is displayed by shifting the display space without changing the slant angle of the virtual image 301 using the above-described configuration of Fig. 5.

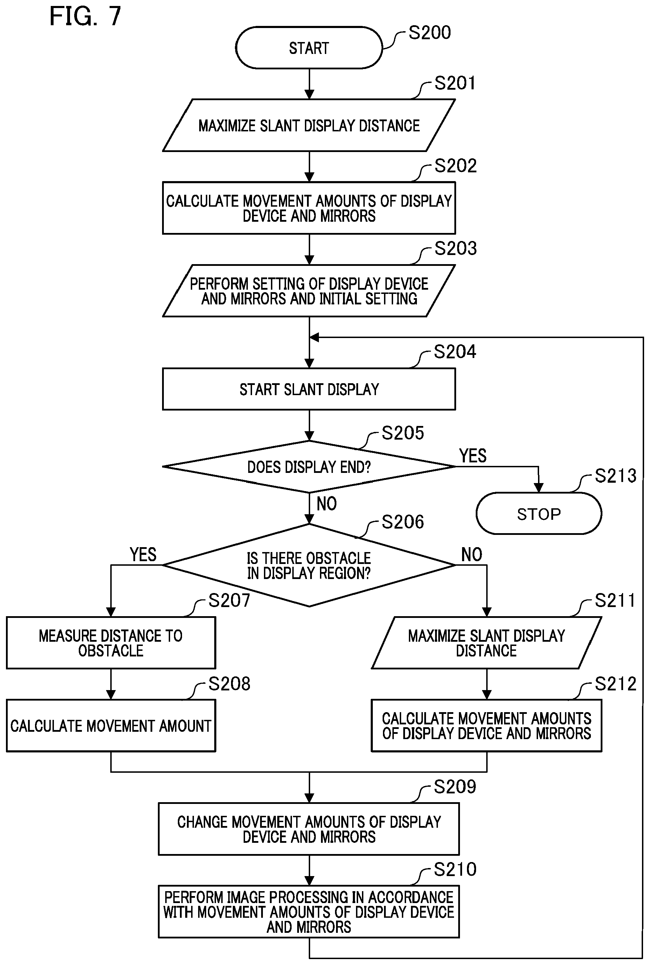

Fig. 7 is a flowchart illustrating an operation example of a display control method for the HUD device according to the second embodiment. Fig. 7 illustrates a flow for shifting the display space without changing a slant of the virtual image so that the virtual image 301 is not entered into an obstacle when there is the obstacle in the display region of the HUD device 2 as in Fig. 3B described above.

An operation of each step of the flowchart of Fig. 7 is performed by causing a CPU or the like serving as a computer in the HUD system to execute a computer program stored in a memory.

First, in steps S200 to S205, a process when the HUD system 1 is activated will be described. Since processes of steps S200 and S201 are similar to those of steps S100 and S101, description thereof will be omitted.

In step S202, the display space control unit 24 calculates the movement amount 31 of the display device 10, the movement amount 32 of the first reflection mirror 12, and the movement amount 33 of the second reflection mirrors 13 based on d2 corresponding to the maximum position of the slant display distance acquired in step S201.

As described above, by forming the movement amounts 31 to 33 and a slant display distance of the virtual image 301 as a table in advance and storing the table in the memory of the of the HUD system 1, it is possible to acquire the movement amounts 31 to 33 from the slant display distance. The movement amounts may be stored as a function, as described above, the calculation may be performed based on the function.

In step S203, the display driving unit 25 performs setting of the movement amount 31 of the display device 10 calculated in step S202, the movement amount 32 of the first reflection mirror 12, and the movement amount 33 of the second reflection mirrors 13 and the initial setting of the HUD system 1. Since processes of steps S204, S205, and S213 are similar to those of steps S104, S105, and S113, description thereof will be omitted.

Next, a process performed in steps S206 to S210 in accordance with whether there is an obstacle in the display space of the HUD device 2 will be described. In step S206, when the display space detection unit 22 detects that there is the obstacle in the display space (display region) of the HUD device 2, the process proceeds to step S207. In the case of No, the process proceeds to step S211.

In step S207, the display space control unit 24 acquires the distance d3 to the obstacle measured by the surroundings detection unit 3. In step S208, the display space control unit 24 calculates the movement amounts 31 to 33 so that the distance d2 to the virtual image 301 satisfies d3>=d2.

The movement amounts 31 to 33 are calculated from the distance d2 based on the function formula as described above or are acquired from the memory in which the distance d2 and the mirror angle 30 are stored in advance as a table. In this way, in the second embodiment, the position of the light reflection unit is adjusted to control the display space of the virtual image.

In step S209, the display driving unit 25 shifts the display device 10, the first reflection mirror 12, and the second reflection mirror 13 based on the movement amounts 31 to 33 acquired by the display space control unit 24 in step S208.

In step S210, based on the movement amounts 31 to 33, the image processing unit 21 performs projection transformation on the image to be displayed and performs control without changing the shape of the display image from the eye box 200. Since processes of steps S211 and S212 are similar to those of steps S201 and S202, description thereof will be omitted.

The flow of Fig. 4 and the flow of Fig. 7 may be appropriately combined. That is, for example, when the distance d3 of the vehicle in front is between predetermined values x1 and x2 (where x1>x2), the display position of the virtual image may be shifted to the front without changing the slant angle of the virtual image as in the flow of Fig. 7 as the distance d3 decreases. When the distance d3 is equal to or less than the predetermined value x2, the slant angle of the virtual image may be stood up as the distance d3 decreases as in the flow of Fig. 4.

Alternatively, when the distance d3 is equal to or less than the predetermined value x1, the distance d1 to the lower end of the virtual image 301 may be gradually shortened and the position of the virtual image may be shifted to the front while gradually standing up the slant angle of the virtual image as the distance d3 decreases as in the flow of Fig. 4.

In the foregoing embodiment, since the display space of the virtual image is controlled, at least one of the position or the angle of the light reflection unit may be adjusted. To control the display space of the virtual image, at least one of a position and an angle of a light source of display light to be projected to the light reflection unit may be adjusted. Accordingly, at least one of a position and an angle of the virtual image may be changed.

While the present invention has been described with reference to exemplary embodiments, it is to be understood that the invention is not limited to the disclosed exemplary embodiments. The scope of the following claims is to be accorded the broadest interpretation to encompass all such modifications and equivalent structures and functions.

In addition, as a part or the whole of the control according to the embodiments, a computer program realizing the function of the embodiments described above may be supplied to the information processing device through a network or various storage media. Then, a computer (or a CPU, an MPU, or the like) of the information processing device may be configured to read and execute the program. In such a case, the program and the storage medium storing the program configure the present invention.

The present invention includes an embodiment implemented using, for example, at least one processor or circuit configured to function of the embodiments explained above. Distributed processing may be performed using a plurality of processor.

This application claims the benefit of Japanese Patent Application No. 2022-194017, filed on December 5, 2022, which is hereby incorporated by reference herein in its entirety.

An information processing device for an HUD system capable of reducing an influence of an obstacle comprises an acquisition unit configured to acquire obstacle information at a position viewed in a real space of a virtual image formed by a head-up display; and a control unit configured to control the position viewed in the real space of the virtual image based on the obstacle information acquired by the acquisition unit.

## Claims

1. An information processing device comprising at least one processor or circuit configured to function as:
an acquisition unit configured to acquire obstacle information at a position viewed in a real space of a virtual image formed by a head-up display; and
a control unit configured to control the position viewed in the real space of the virtual image based on the obstacle information acquired by the acquisition unit.

2. The information processing device according to claim 1, wherein the control unit controls at least one of a position and an angle of a first reflection unit reflecting light projected from a display unit that displays an image.

3. The information processing device according to claim 2, wherein the control unit controls the angle of the first reflection unit by rotating the first reflection unit in a circumferential direction of a rotational shaft of the first reflection unit.

4. The information processing device according to claim 2,
further comprising a second reflection unit configured to reflect light from the first reflection unit, expand a projected image of light from the first reflection unit at a predetermined magnification, and correct distortion, and
wherein the control unit controls at least one of a position and an angle of the second reflection unit.

5. The information processing device according to claim 1, wherein the control unit controls at least one of a position and an angle of a display unit that displays an image.

6. The information processing device according to claim 1, wherein the control unit changes at least one of a position and an angle of the virtual image.

7. The information processing device according to claim 1, wherein the control unit moves the position of the virtual image forward or backward with a slant angle of the virtual image maintained.

8. The information processing device according to claim 1, wherein the at least one processor or circuit is further configured to function as a display image generation unit configured to generate a display image to be displayed on a display unit that displays an image.

9. The information processing device according to claim 1, wherein the head-up display is disposed in a movable apparatus.

10. The information processing device according to claim 9,
wherein the at least one processor or circuit is further configured to function as a processing unit configured to perform image processing on a display image which is displayed on a display unit, and
wherein, when the position viewed in the real space of the virtual image is changed, the image processing is performed based on the position viewed in the real space so that a shape of the display image viewed from a driver of the movable apparatus is not changed.

11. The information processing device according to claim 1, wherein the acquisition unit acquires the obstacle information regarding whether the position viewed in the real space of the virtual image overlaps with a position of an obstacle detected by the acquisition unit.

12. The information processing device according to claim 11, wherein, when the position viewed in the real space of the virtual image overlaps with the position of the obstacle detected by the acquisition unit, the control unit controls the position viewed in the real space of the virtual image so that the position viewed in the real space does not overlap with the position of the obstacle.

13. The information processing device according to claim 11, wherein the acquisition unit acquires distance information from an imaging unit capable of performing imaging surface phase difference ranging or stereo ranging.

14. A display system comprising:
a display unit configured to project light;
a head-up display configured to display the light projected from the display unit as a virtual image; and
at least one processor or circuit configured to function as:
an acquisition unit configured to acquire obstacle information at a position viewed in a real space of the virtual image, and
a control unit configured to control the position viewed in the real space of the virtual image based on the obstacle information acquired by the acquisition unit.

15. A movable apparatus comprising a display system including:
a display unit configured to project light;
a head-up display configured to display the light projected from the display unit as a virtual image; and
at least one processor or circuit configured to function as:
an acquisition unit configured to acquire obstacle information at a position viewed in a real space of the virtual image,
a control unit configured to control the position viewed in the real space of the virtual image based on the obstacle information acquired by the acquisition unit, and
a movement control unit configured to control movement of the movable apparatus.

16. An information processing method comprising:
acquiring obstacle information at a position viewed in a real space of a virtual image formed by a head-up display; and
controlling the position viewed in the real space of the virtual image based on the obstacle information acquired in the acquiring.

17. A non-transitory computer-readable storage medium configured to store a computer program comprising instructions for executing following processes including:
acquiring obstacle information at a position viewed in a real space of a virtual image formed by a head-up display; and
controlling the position viewed in the real space of the virtual image based on the obstacle information acquired in the acquiring.
